# EUROPÄISCHE PATENTSCHRIFT

(11) **EP 3 977 058 B1**
(45) Veröffentlichungstag und Bekanntmachung des Hinweises auf die Patenterteilung: **03.05.2023**
(21) Anmeldenummer: 20723035.0
(22) Anmeldetag: 22.04.2020
(51) Int. Cl.: G01D 7/00, G01D 21/00, H04B 1/3816, G06K 19/07

(54) **ELEKTRONISCHE VORRICHTUNG UND FELDGERÄT**
ELECTRONIC DEVICE AND FIELD DEVICE
DISPOSITIF ÉLECTRONIQUE ET DISPOSITIF DE TERRAIN

(30) Priorität: 28.05.2019 DE 102019114323
(43) Veröffentlichungstag der Anmeldung: 06.04.2022
(73) Patentinhaber: Endress + Hauser Flowtec AG, 4153 Reinach (CH)
(72) Erfinder: TANNER, Lukas, 4104 Oberwil BL (CH); FIEDLER, Marc, 4153 Reinach (CH)
(74) Vertreter: Waselikowski, Stefan
(86) Internationale Anmeldenummer: PCT/EP2020/061189
(87) Internationale Veröffentlichungsnummer: WO 2020/239330

(56) Entgegenhaltungen:
- EP-A1- 3 008 530
- EP-A1- 3 217 500
- WO-A1-2005/103851
- DE-A1-102011 084 789
- DE-A1-102016 106 179

## Beschreibung

Die Erfindung betrifft eine elektronische Vorrichtung eines Feldgeräts mit einem Funkmodul eingerichtet zum Betreiben einer SIM-Karte und ein Feldgerät mit einer solchen Vorrichtung.

Elektronische Vorrichtungen mit Funkmodul, welche zwecks Datenübertragung bzw. Kommunikation auf eine SIM-Karte zurückgreifen sind bereits bekannt, wie beispielsweise in der EP3217500A1 offenbart. Hierbei ist bei Einsatz einer SIM-Karte die SIM-Karte mittels einer Schnittstelle von einem Funkmodul getrennt, wobei die Schnittstelle dazu eingerichtet ist, einen EX-sicheren Betrieb nach ETSI-Norm bzgl. der RED-Richtlinie 2014/53/EU (Radio Equipment Directive) zu gewährleisten.

Die DE102016106179A1 offenbart ein Feldgerät der Mess- und Automatisierungstechnik, bei welchem ein Funkmodul durch eine Folge von Beschleunigungen eines Gehäuses des Feldgeräts an- bzw. ausschaltbar ist.

Die DE102011084789A1 offenbart eine Anordnung von Feldgeräten und einem Bediengerät, wobei das Bediengerät eine Zugriffseinheit zum Senden von Daten an einen Transponder eines Feldgeräts aufweist.

Moderne Funkmodule weisen eine interne Spannungsregelung auf, wodurch die in der EP3217500A1 gelehrte Schnittstelle obsolet ist.

Aufgabe der Erfindung ist es daher, eine elektronische Vorrichtung und ein Feldgerät vorzuschlagen, mittels welchen ein EX-sicherer Betrieb einer SIM-Karte gewährleistet ist.

Die Aufgabe wird gelöst durch eine elektronische Vorrichtung gemäß dem unabhängigen Anspruch 1 sowie durch ein Feldgerät gemäß dem unabhängigen Anspruch 9.

Eine erfindungsgemäße elektronische Vorrichtung umfasst:
ein Funkmodul eingerichtet zum Austausch von Informationen;
eine Schnittstellenvorrichtung eingerichtet zur Aufnahme einer SIM-Karte, wobei die Schnittstellenvorrichtung eine Datenschnittstelle, eine Taktschnittstelle, eine Reset-Schnittstelle und eine Versorgungschnittstelle eingerichtet zur Energieversorgung der SIM-Karte aufweist;
eine Platine, auf welcher das Funkmodul und die Schnittstellenvorrichtung angeordnet und elektrisch miteinander verbunden sind;
wobei das Funkmodul einen Taktgeber eingerichtet zum Erzeugen eines Taktsignals aufweist,
wobei zwischen Funkmodul und Schnittstellenvorrichtung folgende elektrische Verbindungen eingerichtet sind:
   eine erste elektrische Verbindung zur bidirektionalen Datenübertragung zwischen Funkmodul und SIM-Karte;
   eine zweite elektrische Verbindung zur Übermittlung eines Taktsignals an die SIM-Karte;
   eine dritte elektrische Verbindung zur Übermittlung eines Reset-Signals an die SIM-Karte;
   eine vierte elektrische Verbindung zur Vorgabe der Betriebsspannung,
   wobei die elektronische Vorrichtung eine Energieversorgungseinheit eingerichtet zum Betreiben des Funkmoduls sowie der SIM-Karte aufweist, wobei eine fünfte elektrische Verbindung zwischen Energieversorgungseinheit und SIM-Karte und eine sechste elektrische Verbindung zwischen Energieversorgungeinheit und Funkmodul eingerichtet ist,
   wobei die erste Verbindung bis fünfte Verbindung jeweils ein Widerstandselement eingerichtet zur Leistungsbegrenzung aufweisen,
   wobei das Funkmodul eine Spannungsvorgabeschaltung und einen zugehörigen Spannungsausgang aufweist, welche Spannungsvorgabeschaltung dazu eingerichtet ist, der SIM-Karte eine Betriebsspannung vorzugeben,
   die vierte elektrische Verbindung eine Entkopplungsschaltung mit leistungsbegrenztem Ausgang zur Versorgungsschnittstelle aufweist, welche Entkopplungsschaltung dazu eingerichtet ist, Spannungsvorgabe und Energieversorgung der SIM-Karte voneinander zu entkoppeln,
   wobei mittels der Entkopplung ein eigensicherer Betrieb der SIM-Karte nach Ex ia und/oder EX ib, IEC 60079-11 Edition 6.0 2011-06 gewährleistet ist.

Die SIM-Karte erfüllt dabei den ETSI-Standard TS102221 V15.1.0 (2018-12).

In einer Ausgestaltung umfasst die Entkopplungsschaltung einen Operationsverstärker und einen Transistor, wobei der Operationsverstärker zwei Eingänge und einen Ausgang sowie eine Schnittstelle zur Energieversorgungeinheit aufweist, welche Schnittstelle mit der elektrischen Leitung der fünften elektrischen Verbindung verbunden ist,
wobei das Widerstandselement zur Leistungsbegrenzung zwischen Funkmodul und einem invertierenden Eingang des Operationsverstärkers angeordnet ist,
wobei der Ausgang des Operationsverstärkers an eine Basis bzw. ein Gate des Transistors angebunden ist,
wobei ein Stromeingang des Transistors mit der fünften elektrischen Verbindung verbunden ist,
wobei ein nichtinvertierender Eingang des Operationsverstärkers mit einem mit der SIM-Karte verbundenen Stromausgang des Transistors verbunden ist.

In einer Ausgestaltung ist das Funkmodul mit einer ersten Betriebsspannung V1 betreibbar, und wobei das Funkmodul dazu eingerichtet ist, der SIM-Karte eine zweite Betriebsspannung V2 vorzugeben, wobei V1 grösser ist als V2.

In einer Ausgestaltung ist V1 größer als 3.5 V, und wobei V2 kleiner als 3.2 V ist.

In einer Ausgestaltung weist das Widerstandselement der ersten Verbindung einen Widerstand zwischen 30 Ohm und 500 Ohm auf,
wobei das Widerstandselement der zweiten Verbindung einen Widerstand zwischen 30 Ohm und 500 Ohm aufweist,
wobei das Widerstandselement der dritten Verbindung einen Widerstand zwischen 30 Ohm und 5 kOhm aufweist,
wobei das Widerstandselement der vierten Verbindung einen Widerstand zwischen 30 Ohm und 500 kOhm aufweist,
wobei das Widerstandselement der fünften Verbindung einen Widerstand zwischen 10 Ohm und 500 Ohm aufweist.

Auf diese Weise kann im Falle eines Fehlers des Funkmoduls und/oder der SIM-Karte eine an die SIM-Karte abgegebene Leistung begrenzt werden.

In einer Ausgestaltung ist zwischen Stromausgang des Transistors und Versorgungsschnittstelle ein mit einer Masse verbundener Speicherkondensator angeordnet,
und wobei eine siebte Verbindung mit einem Entladewiderstandselement zwischen Spannungsausgang des Funkmoduls und Versorgungsschnittstelle parallel zur vierten Verbindung eingerichtet ist.

In einer Ausgestaltung sind parallel zum invertierenden Eingang des Operationsverstärkers und zum Ausgang des Operationsverstärkers ein Filterwiderstandselement und ein Filterkondensator in Reihe geschaltet.

Auf diese Weise können unerwünschte hochfrequente Schwingungen einer Ausgangsspannung am Ausgang des Operationsverstärkers vermieden werden, so dass der Transistor stabil betreibbar ist.

In einer Ausgestaltung umfasst die Entkopplungsschaltung einen Operationsverstärker, wobei der Operationsverstärker zwei Eingänge und einen Ausgang sowie eine Schnittstelle zur Energieversorgung aufweist, welche Schnittstelle mit der elektrischen Leitung der fünften elektrischen Verbindung verbunden ist,
wobei das mindestens eine Widerstandselement zur Leistungsbegrenzung zwischen Funkmodul und dem nichtinvertierenden Eingang des Operationsverstärkers angeordnet ist und der invertierende Eingang des Operationsverstärkers mit dem Ausgang des Operationsverstärkers sowie der Energieversorgung der SIM-Karte verbunden ist.

Ein erfindungsgemäßes Feldgerät der Mess-/Automatisierungstechnik umfasst:
Einen Messwandler;
Eine elektronische Mess-/Betriebsschaltung eingerichtet zum Betreiben des Messwandlers und zum Bereitstellen von Messwerten;
eine elektronische Vorrichtung gemäß einem der vorigen Ansprüche;
ein Gehäusemodul zum Behausen der elektronischen Mess-/Betriebsschaltung sowie der elektronischen Vorrichtung,
wobei die elektronische Mess-/Betriebsschaltung dazu eingerichtet ist, das Funkmodul zu betreiben.

In einer Ausgestaltung weist das Feldgerät eine SIM-Karte auf, welche über die Schnittstellenvorrichtung mit der elektronischen Vorrichtung verbunden ist.

Im Folgenden wird die Erfindung anhand von Ausführungsbeispielen beschrieben.
Fig. 1 zeigt eine Skizze einer beispielshaften erfindungsgemäßen elektronischen Vorrichtung mit einer erfindungsgemäßen Entkopplungsschaltung.
Fig. 2, 3 und 4 skizzieren beispielhafte erfindungsgemäße Entkopplungsschaltungen.
Fig. 5 zeigt eine schematische Darstellung eines Feldgeräts der Mess- und Automatisierungstechnik.

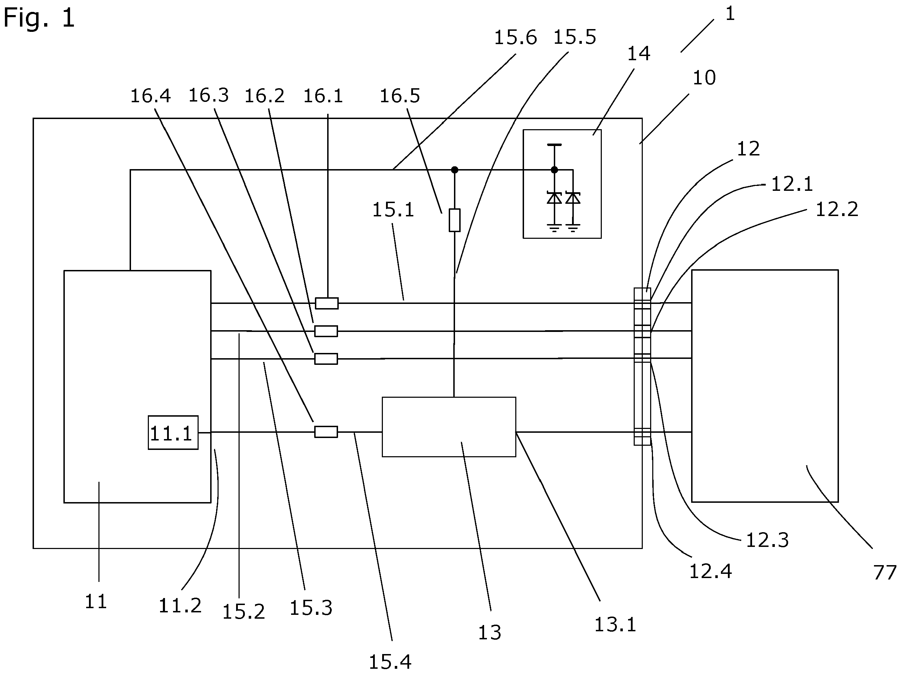

Fig. 1 skizziert den schematischen Aufbau einer beispielhaften erfindungsgemäßen elektronischen Vorrichtung 1 mit einer Platine 10, auf welcher ein Funkmodul 11, eine Schnittstellenvorrichtung 12 eingerichtet zum Aufnehmen einer SIM-Karte 77, eine erfindungsgemäße beispielhafte Entkopplungsschaltung 13 und eine Energieversorgungseinheit 14 angeordnet ist. Das Funkmodul weist eine Spannungsvorgabeschaltung 11.1 auf, welche dazu eingerichtet ist, eine Spannung am Spannungsausgang 11.2 auszugeben, und über eine vierte elektrische Verbindung der Entkopplungsschaltung zuzuführen. Bei eingelegter SIM-Karte 77 ist das Funkmodul mit der SIM-Karte über die Schnittstellenvorrichtung mittels elektrischer Verbindungen 15 verbunden, wobei eine erste elektrische Verbindung 15.1 zum bidirektionalen Datenübertragung zwischen Funkmodul und SIM-Karte eingerichtet ist, und eine zweite elektrische Verbindung 15.2 zur Übermittlung eines Taktsignals an die SIM-Karte eingerichtet ist, und eine dritte elektrische Verbindung 15.3 zur Übermittlung eines Reset-Signals an die SIM-Karte eingerichtet ist und eine vierte elektrische Verbindung 15.4 zur Vorgabe einer Betriebsspannung der SIM-Karte eingerichtet ist. Ausgehend von der Energieversorgungseinheit 14 wird die SIM-Karte über eine fünfte elektrische Verbindung 15.5 und das Funkmodul über eine sechste elektrische Verbindung 15.6 mit Energie versorgt. Die fünfte elektrische Verbindung ist dabei der Entkopplungsschaltung zugeführt und über einen Ausgang 13.1 der Entkopplungsschaltung der Schnittstellenvorrichtung zugeführt.

Die fünfte elektrische Verbindung und sechste elektrische Verbindung können wie in Fig. 1 dargestellt abschnittsweise bis zu einem Knotenpunkt gleich sein.

Die fünfte elektrische Verbindung und die vierte elektrische Verbindung sind wie in Fig. 1 durch die Entkopplungsschaltung zusammengeführt.

Die elektrischen Verbindungen zwischen Funkmodul und SIM-Karte werden mittels Schnittstellen 12.1, 12.2, 12.3, 12.4 der Schnittstellenvorrichtung 12 geschlossen, wobei 12.1 eine Datenschnittstelle, 12.2 eine Taktschnittstelle, 12.3 eine Reset-Schnittstelle und 12.4 eine Versorgungsschnittstelle ist.

Je nach SIM-Karte hat die Betriebsspannung einen bestimmten Wert, so kann dieser Wert beispielsweise 1.8 V oder 3 V betragen. Eine Initialisierung der SIM-Karte umfasst ein Vorgeben einer ersten, niedrigen Spannung an die SIM-Karte, beispielsweise 1.8 V, und Prüfen, ob die SIM-Karte nach Anlegen eines Reset-Signals bzw. eines Spannungsimpulses über die dritte elektrische Verbindung über die erste elektrische Verbindung 15.1 ein elektrisches Signal überträgt. Falls nicht, dann wird die Spannung auf einen weiteren höheren Wert, beispielsweise 3 Volt angehoben. Dieser Vorgang kann ein- oder mehrfach wiederholt werden. Mit Eingang eines von der SIM-Karte ausgesandten elektrischen Signals bei dem Funkmodul ist die Initialisierung abgeschlossen.

Um eine solche elektronische Vorrichtung in einem EX-Bereich einsetzen zu können, muss sie so ausgestaltet sein, dass eine Explosion nicht entsteht oder sich nicht ausbreitet. Da eine SIM-Karte leicht zugänglich sein muss, ist eine räumliche Begrenzung einer im Bereich der SIM-Karte entstehenden Explosion nicht benutzerfreundlich umsetzbar, so dass eine Explosionsentstehung vermieden werden muss. Das Funkmodul 11 muss für einen sachgemäßen Betrieb mit einer Leistung betrieben werden, welche deutlich über einer Grenze zur Explosionsvermeidung liegen kann und ist daher eingekapselt. Im Falle eines Fehlers des Funkmoduls muss daher vermieden werden, dass diese Leistung an die SIM-Karte abgegeben wird. Erfindungsgemäß ist dabei die Entkopplungsschaltung 13 vorgesehen, welche dazu eingerichtet ist, die Spannungsvorgabe von der Energieversorgung der SIM-Karte zu trennen. Weiterhin sind in der ersten elektrischen Verbindung bis fünften elektrischen Verbindung jeweils Widerstandselemente 16.1 bis 16.5 vorgesehen, welche leistungsbegrenzend wirken.

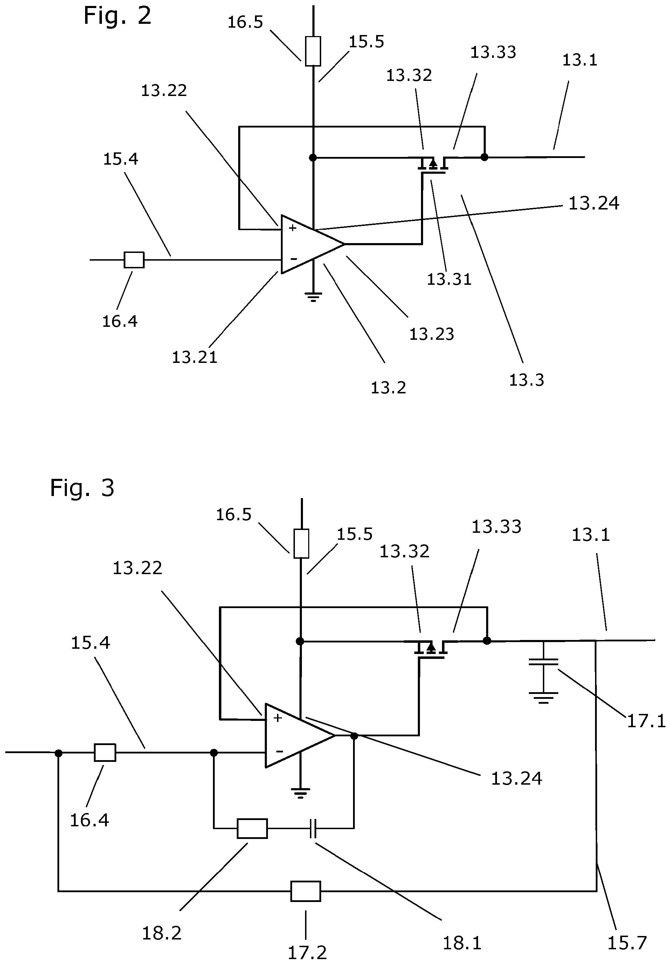

Beispielhafte erfindungsgemäße Entkopplungsschaltungen sind in Figs. 2 bis 4 dargestellt.

Fig. 2 zeigt eine Entkopplungsschaltung umfassend einen Operationsverstärker 13.2 und einen Transistor 13.3, wobei der Operationsverstärker einen invertierenden Eingang 13.21, einen nichtinvertierenden Eingang 13.22, einen Ausgang 13.23 und eine Schnittstelle 13.24 zur Energieversorgungseinheit 14 zwecks Energieversorgung aufweist, und wobei der Transistor 13.3 einen Steuereingang bzw. Basis oder Gate 13.31, einen Stromeingang 13.32 und einen Stromausgang 13.32 aufweist. Die fünfte elektrische Verbindung ist dabei dem Stromeingang 13.32 des Transistors und dem Operationsverstärker 13.2 zwecks Energieversorgung zugeführt. Der Stromausgang 13.33 des Transistors entspricht dem leistungsbegrenzten Ausgang 13.1 der Entkopplungsschaltung, wobei eine am Stromausgang 13.33 anliegende elektrische Spannung auf den nichtinvertierenden Eingang 13.22 des Operationsverstärkers rückgekoppelt ist. Der invertierende Eingang 13.21 ist mit der vierten elektrischen Verbindung 15.4 beaufschlagt. Der Ausgang 13.23 des Operationsverstärkers ist dem Steuereingang 13.31 des Transistors zugeführt. Eine durch Vorgeben einer elektrischen Spannung durch das Funkmodul am invertierenden Eingang des Transistors anliegende Spannung liegt dabei durch entsprechende Regelung durch Operationsverstärker und Transistor auch am Stromausgang des Transistors an, wobei die elektrische Leistung zum Betrieb der SIM-Karte fast ausschließlich durch die elektrische Versorgungseinheit 14 über die fünfte elektrische Leitung 15.5 bereitgestellt wird.

Fig. 3 skizziert zwei Ergänzungen der in Fig. 2 gezeigten Entkopplungsschaltungen, wobei die Ergänzungen wie in Fig. 3 gezeigt gemeinsam oder auch alternativ eingesetzt werden können.

Eine Ergänzung umfasst eine Filterschaltung mit einem zu einem Filterkondensator 18.1 in Reihe geschalteten Filterwiderstandselement 18.2, welche in einem Rückkopplungspfad zwischen Ausgang des Operationsverstärkers und dem invertierenden Eingang des Operationsverstärkers angeordnet sind. Der Rückkopplungspfad aus Filterkondensator 18.1 und Filterwiderstandselement 18.2 reduziert im Zusammenhang mit Widerstandselement 16.4 die Verstärkung des Operationsverstärkers für hohe Frequenzen. Damit werden unerwünschte hochfrequente Schwingungen verhindert und die Schaltung stabilisiert. Die sich durch Filterwiderstandselement 18.2 und Widerstandselement 16.4 ergebende Verstärkung kann im Betrag zwischen 1 und 100 liegen. Die Zeitkonstante, welche über eine Wahl einer Kapazität des Filterkondensators 18.1 und einem Widerstandswert des Widerstandselements 16.4 eigestellt werden kann, liegt im Bereich 100ns bis 100ps, angepasst an Eigenschaften des verwendeten Transistors sowie Operationsverstärkers.

Ein Fachmann ist in der Lage, die Komponenten der Entkopplungsschaltung gemäß seiner Bedürfnisse auszuwählen.

Eine Ergänzung umfasst einen Speicherkondensator 17.1 und ein Entladewiderstandselement 17.2, wobei der Speicherkondensator zwischen Stromausgang 13.33 des Transistors und einer Masse anliegt, und wobei das Entladewiderstandselement in einer siebten elektrischen Verbindung 15.7 angeordnet ist, welche siebte elektrische Verbindung Stromausgang 13.33 und vierte elektrische Verbindung kontaktiert, wobei der Kontakt zwischen siebter elektrischer Verbindung und vierter elektrischer Verbindung zwischen viertem Widerstandselement und Spannungsausgang 11.2 des Funkmoduls (siehe Fig. 1) hergestellt ist. Der Kondensator 17.1 dient dazu, Energie für kurze Leistungsspitzen zu liefern, welche von der SIM-Karte gefordert werden können. Dies verhindert, dass die Leistung von der Energieversorgungseinheit 14 geliefert werden muss, was die Spannung stabilisiert und Anforderungen an die Energieversorgungseinheit reduziert. Das Entladewiderstandselement 17.2 dient dazu, den Speicherkondensator 17.1 beim Ausschalten kontrolliert zu entladen, wobei das Entladewiderstandselement einen höheren, insbesondere mindestens dreifach höheren Widerstand aufweist als Widerstandselement 16.5.

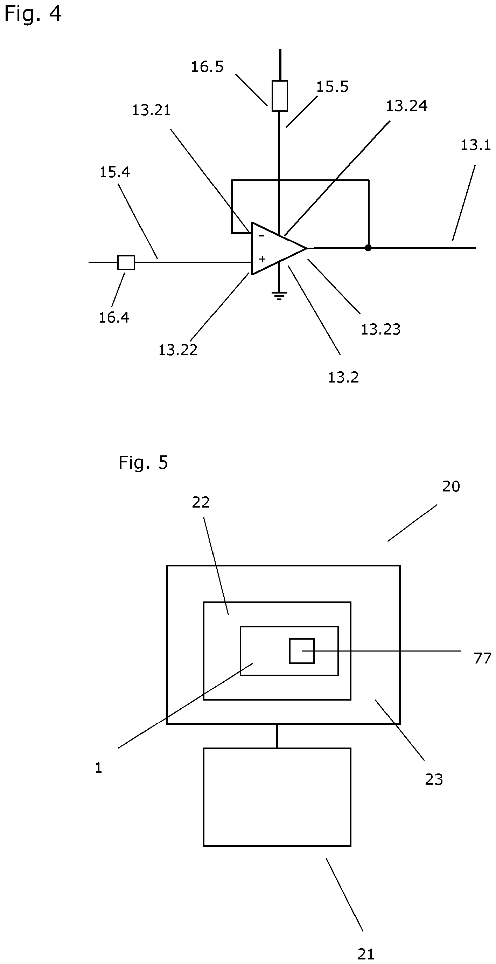

Fig. 4 zeigt eine zu in Figs. 2 und 3 gezeigten Ausgestaltungen alternative Ausgestaltungen, wobei der Ausgang 13.23 des Operationsverstärkers auf den invertierenden Eingang des Operationsverstärkers rückgekoppelt ist, und wobei die vierte Verbindung 15.4 an den nichtinvertierenden Eingang des Operationsverstärkers angebunden ist. Die fünfte elektrische Verbindung ist dabei dem Operationsverstärker 13.2 zwecks Energieversorgung zugeführt Auch in diesem Fall findet eine Entkopplung von Spannungsvorgabe und Energieversorgung statt, da die über den Ausgang abgegebene elektrische Leistung des Operationsverstärkers hauptsächlich über die fünfte elektrische Verbindung bezogen wird. Die in Fig. 4 gezeigte Ausgestaltung ist eine einfachere Umsetzung einer Entkopplungsschaltung, hat jedoch erhöhte Anforderungen an den Operationsverstärker und bedarf einer höheren Versorgungsspannung über die fünfte elektrische Verbindung. Der Operationsverstärker muss den von der SIM Karte benötigten Strom treiben können und die minimale Spannungsdifferenz zwischen der Speisung des Operationsverstärkers und dessen Ausgang darf nicht zu gross sein.

Fig. 5 skizziert auf schematische Weise den Aufbau eines beispielshaften Feldgeräts 20 der Mess- und Automatisierungstechnik mit einem Messwandler 21 zum Messen einer Messgröße und Bereitstellen von Messwerten der Messgröße, einer elektronischen Mess-/Betriebsschaltung 22, einer erfindungsgemäßen elektronischen Vorrichtung 1 und einer bereitgestellten SIM-Karte 77. Die elektronische Mess-/Betriebsschaltung ist dabei in einem Gehäusemodul 23 angeordnet und dazu eingerichtet, den Messwandler, die elektronische Vorrichtung und die SIM-Karte zu betreiben.

### Bezugszeichenliste

- 1: elektronische Vorrichtung
- 10: Platine
- 11: Funkmodul
- 11.1: Spannungsvorgabeschaltung
- 11.2: Spannungsausgang
- 12: Schnittstellenvorrichtung
- 12.1: Datenschnittstelle
- 12.2: Taktschnittstelle
- 12.3: Reset-Schnittstelle
- 12.4: Versorgungsschnittstelle
- 13: Entkopplungsschaltung
- 13.1: leistungsbegrenzter Ausgang
- 13.2: Operationsverstärker
- 13.21: invertierender Eingang
- 13.22: nichtinvertierender Eingang
- 13.23: Ausgang
- 13.24: Schnittstelle
- 13.3: Transistor
- 13.31: Basis, Gate, Steuereingang
- 13.32: Stromeingang
- 13.33: Stromausgang
- 14: Energieversorgungseinheit
- 15: elektrische Verbindung
- 15.1: erste elektrische Verbindung
- 15.2: zweite elektrische Verbindung
- 15.3: dritte elektrische Verbindung
- 15.4: vierte elektrische Verbindung
- 15.5: fünfte elektrische Verbindung
- 15.6: sechste elektrische Verbindung
- 15.7: siebte elektrische Verbindung
- 16: Widerstandselemente
- 16.1 - 16.5: Widerstandselement
- 17.1: Speicherkondensator
- 17.2: Entladewiderstandselement
- 18.1: Filterkondensator
- 18.2: Filterwiderstandselement
- 20: Feldgerät
- 21: Messwandler
- 22: elektronische Mess-/Betriebsschaltung
- 23: Gehäusemodul
- 77: SIM-Karte

## Patentansprüche

1. Elektronische Vorrichtung (1) umfassend:
ein Funkmodul (11) eingerichtet zum Austausch von Informationen;
eine Schnittstellenvorrichtung (12) eingerichtet zur Aufnahme einer SIM-Karte (77), wobei die Schnittstellenvorrichtung eine Datenschnittstelle (12.1), eine Taktschnittstelle (12.2), eine Reset-Schnittstelle (12.3) und eine Versorgungschnittstelle (12.4) eingerichtet zur Energieversorgung der SIM-Karte aufweist;
eine Platine (10), auf welcher das Funkmodul und die Schnittstellenvorrichtung angeordnet und elektrisch miteinander verbunden sind;
wobei das Funkmodul einen Taktgeber eingerichtet zum Erzeugen eines Taktsignals aufweist,
wobei zwischen Funkmodul und Schnittstellenvorrichtung folgende elektrische Verbindungen (15) eingerichtet sind:
eine erste elektrische Verbindung (15.1) zur bidirektionalen Datenübertragung zwischen Funkmodul und SIM-Karte;
eine zweite elektrische Verbindung (15.2) zur Übermittlung eines Taktsignals an die SIM-Karte;
eine dritte elektrische Verbindung (15.3) zur Übermittlung eines Reset-Signals an die SIM-Karte;
eine vierte elektrische Verbindung (15.4) zur Vorgabe der Betriebsspannung,
wobei die elektronische Vorrichtung eine Energieversorgungseinheit (14) eingerichtet zum Betreiben des Funkmoduls sowie der SIM-Karte aufweist, wobei eine fünfte elektrische Verbindung (15.5) zwischen Energieversorgungseinheit und SIM-Karte und eine sechste elektrische Verbindung (15.6) zwischen Energieversorgungeinheit und Funkmodul eingerichtet ist,
wobei die erste Verbindung bis fünfte Verbindung jeweils mindestens ein Widerstandselement (16.1, 16.2, 16.3, 16.4, 16.5) eingerichtet zur Leistungsbegrenzung aufweisen,
**dadurch gekennzeichnet, dass**
das Funkmodul eine Spannungsvorgabeschaltung (11.1) und einen zugehörigen Spannungsausgang (11.2) aufweist, welche Spannungsvorgabeschaltung dazu eingerichtet ist, der SIM-Karte eine Betriebsspannung vorzugeben,
die vierte elektrische Verbindung eine Entkopplungsschaltung (13) mit leistungsbegrenztem Ausgang (13.1) zur Versorgungsschnittstelle aufweist, welche Entkopplungsschaltung dazu eingerichtet ist, Spannungsvorgabe und Energieversorgung der SIM-Karte voneinander zu entkoppeln,
wobei mittels der Entkopplung ein eigensicherer Betrieb der SIM-Karte nach Ex ia und/oder EX ib, nach IEC 60079-11 Edition 6.0 2011-06 gewährleistet ist.

2. Elektronische Vorrichtung nach Anspruch 1,
wobei die Entkopplungsschaltung einen Operationsverstärker (13.2) und einen Transistor (13.3) umfasst, wobei der Operationsverstärker zwei Eingänge und einen Ausgang (13.23) sowie eine Schnittstelle (13.24) zur Energieversorgungeinheit aufweist, welche Schnittstelle mit der elektrischen Leitung der fünften elektrischen Verbindung verbunden ist,
wobei das Widerstandselement der vierten elektrischen Verbindung zur Leistungsbegrenzung zwischen Funkmodul und einem invertierenden Eingang (13.21) des Operationsverstärkers angeordnet ist,
wobei der Ausgang des Operationsverstärkers an eine Basis bzw. ein Gate (13.31) des Transistors angebunden ist,
wobei ein Stromeingang (13.32) des Transistors mit der fünften elektrischen Verbindung verbunden ist,
wobei ein nichtinvertierender Eingang (13.22) des Operationsverstärkers mit einem mit der SIM-Karte verbundenen Stromausgang (13.33) des Transistors verbunden ist.

3. Elektronische Vorrichtung nach Anspruch 1 oder 2,
wobei das Funkmodul (11) mit einer ersten Betriebsspannung V1 betreibbar ist und wobei das Funkmodul dazu eingerichtet ist, der SIM-Karte eine zweite Betriebsspannung V2 vorzugeben, wobei V1 grösser ist als V2.

4. Elektronische Vorrichtung nach Anspruch 3,
wobei V1 größer ist als 3.5 V, und wobei V2 kleiner als 3.2 V ist.

5. Elektronische Vorrichtung nach einem der vorigen Ansprüche,
wobei das Widerstandselement der ersten Verbindung (16.1) einen Widerstand zwischen 30 Ohm und 500 Ohm aufweist,
wobei das Widerstandselement der zweiten Verbindung (16.2) einen Widerstand zwischen 30 Ohm und 500 Ohm aufweist,
wobei das Widerstandselement der dritten Verbindung (16.3) einen Widerstand zwischen 30 Ohm und 5 kOhm aufweist,
wobei das Widerstandselement der vierten Verbindung (16.4) einen Widerstand zwischen 30 Ohm und 500 kOhm aufweist,
wobei das Widerstandselement der fünften Verbindung (16.5) einen Widerstand zwischen 10 Ohm und 500 Ohm aufweist.

6. Elektronische Vorrichtung nach Anspruch 2,
wobei zwischen Stromausgang des Transistors (13.33) und Versorgungsschnittstelle (12.4) ein mit einer Masse verbundener Speicherkondensator (17.1) angeordnet ist,
und wobei eine siebte Verbindung mit einem Entladewiderstandselement (17.2) zwischen Spannungsausgang des Funkmoduls und Versorgungsschnittstelle parallel zur vierten Verbindung eingerichtet ist.

7. Elektronische Vorrichtung nach Anspruch 2,
wobei parallel zum invertierenden Eingang des Operationsverstärkers und zum Ausgang des Operationsverstärkers ein Filterwiderstandselement (18.2) und ein Filterkondensator (18.1) in Reihe geschaltet sind.

8. Elektronische Vorrichtung nach Anspruch 1,
wobei die Entkopplungsschaltung einen Operationsverstärker (13.2) umfasst, wobei der Operationsverstärker zwei Eingänge und einen Ausgang (13.23) sowie eine Schnittstelle (13.24) zur Energieversorgung aufweist, welche Schnittstelle mit der elektrischen Leitung der fünften elektrischen Verbindung verbunden ist,
wobei das Widerstandselement zur Leistungsbegrenzung zwischen Funkmodul und einem nichtinvertierenden Eingang (13.22) des Operationsverstärkers angeordnet ist und ein invertierende Eingang (13.21) des Operationsverstärkers mit dem Ausgang des Operationsverstärkers sowie der Energieversorgung der SIM-Karte verbunden ist.

9. Feldgerät (20) der Mess-/Automatisierungstechnik umfassend:
Einen Messwandler (21);
Eine elektronische Mess-/Betriebsschaltung (22) eingerichtet zum Betreiben des Messwandlers und zum Bereitstellen von Messwerten;
eine elektronische Vorrichtung (1) gemäß einem der vorigen Ansprüche;
ein Gehäusemodul (23) zum Behausen der elektronischen Mess-/Betriebsschaltung sowie der elektronischen Vorrichtung,
wobei die elektronische Mess-/Betriebsschaltung dazu eingerichtet ist, das Funkmodul zu betreiben.

10. Feldgerät der Mess-/Automatisierungstechnik nach Anspruch 9,
wobei das Feldgerät eine SIM-Karte (77) aufweist, welche über die Schnittstellenvorrichtung mit der elektronischen Vorrichtung verbunden ist.

## Claims

1. Electronic device (1) comprising:
a radio module (11) designed for the exchange of information;
an interface unit (12) designed to receive a SIM card (77), wherein the interface unit has a data interface (12.1), a clock interface (12.2), a reset interface (12.3) and a power supply interface (12.4) designed to power the SIM card;
a board (10) on which the radio module and the interface unit are arranged and electrically connected to one another;
wherein the radio module has a clock generator designed to generate a clock signal,
wherein the following electrical connections (15) are configured between the radio module and the interface unit:
a first electrical connection (15.1) for the bidirectional transmission of data between the radio module and the SIM card;
a second electrical connection (15.2) for the transmission of a clock signal to the SIM card;
a third electrical connection (15.3) for the transmission of a reset signal to the SIM card;
a fourth electrical connection (15.4) to specify the operating voltage,
wherein the electronic device has an energy supply unit (14) designed to operate the radio module and the SIM card, wherein a fifth electrical connection (15.5) is configured between the energy supply unit and the SIM card and a sixth electrical connection (15.6) is configured between the energy supply unit and the radio module,
wherein the first connection to the fifth connection each has at least a resistor element (16.1, 16.2, 16.3, 16.4, 16.5) designed to limit the power,
**characterized in that**
the radio module has a voltage specification circuit (11.1) and an associated voltage output (11.2), wherein the voltage specification circuit is designed to specify an operating voltage for the SIM card,
the fourth electrical connection has a decoupling circuit (13) with a power-limited output (13.1) to the power supply interface, wherein the decoupling circuit is designed to decouple the voltage specification and the supply of energy for the SIM card from one another,
wherein an intrinsically safe operation of the SIM card according to Ex ia and/or EX ib, according to IEC 60079-11 Edition 6.0 2011-06, is guaranteed by means of the decoupling.

2. Electronic device as claimed in Claim 1,
wherein the decoupling circuit comprises an operational amplifier (13.2) and a transistor (13.3), wherein the operational amplifier has two inputs and an output (13.23) as well as an interface (13.24) to the energy supply unit, wherein the interface is connected to the electrical line of the fifth electrical connection,
wherein the resistor element of the fourth electrical connection is arranged between the radio module and an inverting input (13.21) of the operational amplifier to limit the power,
wherein the output of the operational amplifier is connected to a base or a gate (13.31) of the transistor,
wherein a current input (13.32) of the transistor is connected to the fifth electrical connection,
wherein a non-inverting input (13.22) of the operational amplifier is connected to a current output (13.33) of the transistor, wherein said output is connected to the SIM card.

3. Electronic device as claimed in Claim 1 or 2,
wherein the radio module (11) can be operated with a first operating voltage V1 and wherein the radio module is designed to specify a second operating voltage V2 for the SIM card, wherein V1 is greater than V2.

4. Electronic device as claimed in Claim 3,
wherein V1 is greater than 3.5 V and wherein V2 is less than 3.2 V.

5. Electronic device as claimed in one of the previous claims,
wherein the resistor element of the first connection (16.1) has a resistance between 30 Ohms and 500 Ohms,
wherein the resistor element of the second connection (16.2) has a resistance between 30 Ohms and 500 Ohms,
wherein the resistor element of the third connection (16.3) has a resistance between 30 Ohms and 5 kOhms,
wherein the resistor element of the fourth connection (16.4) has a resistance between 30 Ohms and 500 kOhms,
wherein the resistor element of the fifth connection (16.5) has a resistance between 10 Ohms and 500 Ohms.

6. Electronic device as claimed in Claim 2,
wherein a storage capacitor (17.1) connected to ground is arranged between the current output of the transistor (13.33) and the power supply interface (12.4), and wherein a seventh connection with a discharge resistor element (17.2) is
configured between the voltage output of the radio module and the power supply interface parallel to the fourth connection.

7. Electronic device as claimed in Claim 2,
wherein a filter resistor element (18.2) and a filter capacitor (18.1) are connected in series in parallel to the inverting input of the operational amplifier and the output of the operational amplifier.

8. Electronic device as claimed in Claim 1,
wherein the decoupling circuit comprises an operational amplifier (13.2), wherein the operational amplifier has two inputs and one output (13.23) as well as an interface (13.24) for the energy supply, wherein said interface is connected to the electrical line of the fifth electrical connection,
wherein the resistor element designed to limit the power is arranged between the radio module and a non-inverting input (13.22) of the operational amplifier and an inverting input (13.21) of the operational amplifier is connected to the output of the operational amplifier and the energy supply of the SIM card.

9. Field device (20) used in measuring/automation engineering, wherein said device comprises:
a transducer (21);
an electronic measuring/operating circuit (22) designed to operate the transducer and make measured values available;
an electronic device (1) as claimed in one of the previous claims;
a housing module (23) designed to house the electronic measuring/operating circuit and the electronic device,
wherein the electronic measuring/operating circuit is designed to operate the radio module.

10. Field device used in measuring/automation engineering as claimed in Claim 9,
wherein the field device has a SIM card (77) that is connected to the electronic device via the interface unit.

## Revendications

1. Dispositif électronique (1) comprenant :
un module radio (11) conçu pour l'échange d'informations ;
un dispositif d'interface (12) conçu pour recevoir une carte SIM (77), le dispositif d'interface présentant une interface de données (12.1), une interface d'horloge (12.2), une interface de réinitialisation (12.3) et une interface d'alimentation (12.4) conçue pour alimenter la carte SIM ;
une platine (10) sur laquelle le module radio et le dispositif d'interface sont disposés et reliés électriquement entre eux ;
le module radio présentant un générateur d'horloge conçu pour générer un signal d'horloge,
les liaisons électriques (15) suivantes étant conçues entre le module radio et le dispositif d'interface :
une première liaison électrique (15.1) pour la transmission bidirectionnelle de données entre le module radio et la carte SIM ;
une deuxième liaison électrique (15.2) pour la transmission d'un signal d'horloge à la carte SIM ;
une troisième liaison électrique (15.3) pour la transmission d'un signal de réinitialisation à la carte SIM ;
une quatrième connexion électrique (15.4) pour spécifier la tension de fonctionnement,
le dispositif électronique présentant une unité d'alimentation en énergie (14), laquelle est conçue pour faire fonctionner le module radio ainsi que la carte SIM, une cinquième liaison électrique (15.5) étant conçue entre l'unité d'alimentation en énergie et la carte SIM et une sixième liaison électrique (15.6) entre l'unité d'alimentation en énergie et le module radio,
la première connexion à la cinquième connexion présentant chacune au moins un élément de résistance (16.1, 16.2, 16.3, 16.4, 16.5) conçu pour limiter la puissance,
**caractérisé en ce que**
le module radio présente un circuit de spécification de tension (11.1) et une sortie tension associée (11.2), lequel circuit de spécification de tension est conçu pour spécifier une tension de fonctionnement pour la carte SIM,
la quatrième liaison électrique présente un circuit de découplage (13) avec une sortie à puissance limitée (13.1) vers l'interface d'alimentation, lequel circuit de découplage est conçu pour découpler l'un de l'autre la spécification de tension et l'alimentation en énergie de la carte SIM,
un fonctionnement à sécurité intrinsèque de la carte SIM selon Ex ia et/ou EX ib, selon IEC 60079-11 Édition 6.0 2011-06, étant garanti au moyen du découplage.

2. Dispositif électronique selon la revendication 1,
pour lequel le circuit de découplage comprend un amplificateur opérationnel (13.2) et un transistor (13.3), l'amplificateur opérationnel présentant deux entrées et une sortie (13.23) ainsi qu'une interface (13.24) avec l'unité d'alimentation en énergie, laquelle interface est reliée à la ligne électrique de la cinquième liaison électrique,
l'élément de résistance de la quatrième liaison électrique étant disposé entre le module radio et une entrée inverseuse (13.21) de l'amplificateur opérationnel pour limiter la puissance,
la sortie de l'amplificateur opérationnel étant reliée à une base ou à une grille (13.31) du transistor,
une entrée courant (13.32) du transistor étant reliée à la cinquième liaison électrique,
une entrée non inverseuse (13.22) de l'amplificateur opérationnel étant reliée à une sortie courant (13.33) du transistor, laquelle sortie est reliée à la carte SIM.

3. Dispositif électronique selon la revendication 1 ou 2,
pour lequel le module radio (11) peut fonctionner avec une première tension de fonctionnement V1 et
pour lequel le module radio est conçu pour spécifier une deuxième tension de fonctionnement V2 à la carte SIM, V1 étant supérieure à V2.

4. Dispositif électronique selon la revendication 3,
V1 étant supérieure à 3,5 V et V2 étant inférieure à 3,2 V.

5. Dispositif électronique selon l'une des revendications précédentes,
pour lequel l'élément de résistance de la première liaison (16.1) présente une résistance comprise entre 30 ohms et 500 ohms,
pour lequel l'élément de résistance de la deuxième liaison (16.2) présente une résistance comprise entre 30 ohms et 500 ohms,
pour lequel l'élément de résistance de la troisième liaison (16.3) présente une résistance comprise entre 30 ohms et 5 kohms,
pour lequel l'élément de résistance de la quatrième liaison (16.4) présente une résistance comprise entre 30 ohms et 500 kohms,
pour lequel l'élément de résistance de la cinquième liaison (16.5) présente une résistance comprise entre 10 ohms et 500 ohms.

6. Dispositif électronique selon la revendication 2,
pour lequel un condensateur de stockage (17.1) relié à une masse est disposé entre la sortie courant du transistor (13.33) et l'interface d'alimentation (12.4), et pour lequel une septième liaison comportant un élément de résistance de décharge (17.2) est établie entre la sortie tension du module radio et l'interface d'alimentation en parallèle avec la quatrième liaison.

7. Dispositif électronique selon la revendication 2,
pour lequel un élément de résistance de filtrage (18.2) et un condensateur de filtrage (18.1) sont montés en série, en parallèle avec l'entrée inverseuse de l'amplificateur opérationnel et avec la sortie de l'amplificateur opérationnel.

8. Dispositif électronique selon la revendication 1,
pour lequel le circuit de découplage comprend un amplificateur opérationnel (13.2), l'amplificateur opérationnel présentant deux entrées et une sortie (13.23) ainsi qu'une interface (13.24) destinée à l'alimentation en énergie, laquelle interface est reliée à la ligne électrique de la cinquième liaison électrique,
l'élément de résistance conçu pour limiter la puissance étant disposé entre le module radio et une entrée non inverseuse (13.22) de l'amplificateur opérationnel et une entrée inverseuse (13.21) de l'amplificateur opérationnel étant reliée à la sortie de l'amplificateur opérationnel ainsi qu'à l'alimentation en énergie de la carte SIM.

9. Appareil de terrain (20) de la technique de mesure / d'automatisation, lequel appareil comprend :
un transducteur (21) ;
un circuit électronique de mesure/d'exploitation (22) conçu pour exploiter le transducteur et pour fournir des valeurs mesurées ;
un dispositif électronique (1) selon l'une des revendications précédentes ;
un module de boîtier (23) destiné à loger le circuit électronique de mesure/d'exploitation et le dispositif électronique,
le circuit électronique de mesure/d'exploitation étant conçu pour exploiter le module radio.

10. Appareil de terrain de la technique de mesure / d'automatisation selon la revendication 9,
pour lequel l'appareil de terrain comprend une carte SIM (77), laquelle est reliée au dispositif électronique par l'intermédiaire du dispositif d'interface.
